# EUROPÄISCHE PATENTANMELDUNG

(11) **EP 1 453 290 A1**
(43) Veröffentlichungstag der Anmeldung: **01.09.2004**
(21) Anmeldenummer: 03100514.3
(22) Anmeldetag: 28.02.2003
(51) Int. Cl.: H04N 1/00

(54) **Verfahren und Vorrichtung zum automatischen Erzeugen von Abzügen fotografischer, digitaler Bilddaten**

(71) Anmelder: Agfa-Gevaert AG, 51373 Leverkusen (DE)
(72) Erfinder: Kolb, Sebald, 81739 München (DE); Henry, Christophe, 81737 München (DE); Hensel, Dietmar, 82275 Emmering (DE); Kemmather, Bernd, 81476 München (DE); Krämer, Ullrich, 81667 München (DE); Siebenhandl, Michael, 85321 Riemerling (DE); Wein, Peter, 80333 München (DE)

(57) **Zusammenfassung**

Die Erfindung betrifft ein Verfahren zum automatischen Erzeugen von Abzügen fotografischer, digitaler Bilddaten. Dabei werden die eingehenden Bilddaten zusammen mit Auftragsdaten auftragsweise abgespeichert und in einer Bearbeitungsreihenfolge zur Bearbeitung bereitgestellt. Die Bilddaten werden auftragsweise gemäß der Bearbeitungsreihenfolge bearbeitet, wobei die Bearbeitung zwingende Bearbeitungsschritte, die die Bilddaten aller Aufträge durchlaufen und optionale Bearbeitungsschritte, die die Bilddaten bestimmter Aufträge durchlaufen umfasst. Von den bearbeiteten Bilddaten werden anschließend Abzüge erzeugt. Erfindungsgemäß wird die Bearbeitungsreihenfolge der Aufträge für nachfolgende Bearbeitungsschritte geändert, wenn die Bilddaten eines Auftrages einen optionalen Bearbeitungsschritt durchlaufen. Dadurch kann der Auftragsdurchsatz bei der Bildbearbeitung maßgeblich erhöht werden.

## Beschreibung

Die Erfindung betrifft ein Verfahren zum automatischen Erzeugen von Abzügen fotografischer, digitaler Bilddaten nach dem Oberbegriff von Anspruch 1, sowie eine entsprechende Vorrichtung nach dem Oberbegriff von Anspruch 13.

Die Herstellung von Kopien fotografischer Bilder erfolgt heutzutage hauptsächlich mittels sogenannter digitaler Minilabs. Diese Laborgeräte, welche sich beispielsweise in Stunden-Fotolaboren finden, sind in der Lage sowohl digitale aufgenommene Bilddaten als auch herkömmliche Filme zu bearbeiten. Bilder digitaler Kameras werden beispielsweise über zusätzliche Eingabegeräte oder direkt an Eingabestationen am digitalen Minilab eingelesen. Herkömmliche Filme über CCD-Zeilen oder-Flächen oder andere Sensoren wie CMOS digitalisiert, so dass nach dem Einscannen dieser Filme ebenfalls ein digitales File zur Weiterbearbeitung zur Verfügung steht.

Die eingegangenen digitalen Daten werden im Minilab zuerst einer Eingangsbearbeitung unterzogen. Dabei werden beispielsweise digital über Eingabestationen, Internet oder direkt eingegangene Daten dekomprimiert, wenn sie zur Datenübertragung komprimiert wurden. Die vom Film eingescannten Daten werden einer Scannerkorrektur unterzogen, wobei beispielsweise der Dunkelstrom des abtastenden Sensors berücksichtigt wird, aber auch Korrekturen, wie Kratzerkorrektur oder Randabfallskorrektur, vorgenommen werden können. Nach diesen Eingangsbearbeitungen liegen digitale Bilddaten vor, welche unabhängig von ihrer Herkunftsquelle gleichermaßen in der folgenden Bildbearbeitung bearbeitet werden.

Den Bilddaten eines Auftrags, also beispielsweise eines Films oder einer Kamera-Aufnahmeserie, sind oder werden sogenannte Auftragsdaten hinzugefügt. Diese Auftragsdaten enthalten Informationen über an den Bilddaten vorzunehmende Bildverarbeitungsschritte, über Ausgabeformate oder Auswahl der Ausgabepapiersorte sowie diverse weitere Angaben, die zur Erzeugung von Kopien dieser Bilder notwendig sind. Diese Auftragsdaten können digital eingegebenen Bilddaten bereits in der Kamera oder an einem Eingabegerät zugefügt werden. Es ist aber auch möglich, diese Auftragsdaten an der Benutzeroberfläche des digitalen Minilabs direkt pro Auftrag zu definieren und festzulegen. Letzteres erfolgt auf jeden Fall beim Einscannen herkömmlicher Filme. Bevor ein Film abgetastet wird, wird hierzu im Allgemeinen vom Benutzer eine Auftragskonfiguration festgelegt. Vorgaben hierfür finden sich normalerweise auf der Auftragstasche, mit der der zu kopierende Film in das Labor gebracht wurde. Die auf der Auftragstasche befindlichen Daten werden vom Benutzer am Minilab eingegeben. Diese Daten sind beispielsweise Ausgabeeigenschaften der Kopien wie z. B. das Printformat, 9x13, 10x15, etc., die zu wählende Papiersorte, z. B. matt oder glänzend, aber auch Bildbearbeitungsvorgaben, also Anweisungen, wie die Bilddaten dieses Auftrags von der Bildbearbeitung zu behandeln sind. So kann in den Auftragsdaten beispielsweise vermerkt sein, dass bei diesem Auftrag ein sogenannter Preview vorzusehen ist. D. h. die Bilder des Auftrags werden an der Benutzeroberfläche angezeigt, so dass der Benutzer ihre Qualität überprüfen kann und manuell Korrekturen vornehmen kann. Des Weiteren kann vorgeschrieben werden, dass Bilddaten dieses Auftrags eine Rote-Augen-Detektion und Korrektur durchlaufen sollen. Dies ist beispielsweise dann vorteilhaft, wenn es sich um einen Auftrag mit vielen Personenaufnahmen handelt. Nach Eingabe der Auftragsdaten an der Benutzeroberfläche wird nun der eingelegte Film abgetastet und Auftragsdaten sowie Bilddaten des zugehörigen Auftrags zusammengefasst. Die digital oder über den Abtaster eingegangenen Bilddaten, welche einer Eingangsbearbeitung unterzogen wurden und Auftragsdaten erhalten haben, werden in einem Eingangsspeicher abgelegt.

Aus diesem Eingangsspeicher werden die Aufträge entnommen und an die Bildbearbeitung weitergereicht, an der Bildkorrekturen wie Grauabgleich, Verschärfung, Kontrastmodifikationen, Rote-Augen-Korrekturen, Farbkorrekturen oder manuelle Korrekturen etc. erfolgen. Diese verschiedenen Bildbearbeitungsschritte werden nacheinander an jedem Auftrag vorgenommen, manche dieser Schritte können auch in einem Bildverarbeitungsschritt vorgenommen werden. So kann beispielsweise Kontrastmodifikation mit Verschärfung gekoppelt werden, indem ein für beide Korrekturen geeigneter Filter auf die Bilddaten angewandt wird. Ist in den Auftragsdaten eines Auftrags vermerkt, dass an diesem Auftrag ein Preview erzeugt werden soll, so dass der Benutzer manuelle Korrekturen vornehmen kann, so wird dieser Auftrag an der Benutzeroberfläche angezeigt. Der Benutzer muss sich nun die Bilder am Bildschirm anschauen und ggf. Korrekturwerte eingeben. Diese Korrekturwerte werden auf die Bilddaten angewandt, der Benutzer kann das so korrigierte Bild erneut am Monitor betrachten, um zu überprüfen, ob das Ergebnis zufriedenstellend ist. Sobald die an der Benutzeroberfläche angezeigten Bilder ein ausgabefähiges Ergebnis darstellen, werden sie vom Benutzer zur weiteren Bearbeitung freigegeben. Der Auftrag wird dann weiteren Bildbearbeitungsschritten wie beispielsweise der Ausgabebearbeitung unterzogen. In der Ausgabebearbeitung werden die Bilddaten in den Farbraum des Ausgabegerätes, also beispielsweise des Printers oder eines CCD-Brenners transformiert.

Sobald die vollständige Bildbearbeitung durchlaufen ist, wird der Auftrag schließlich ausgegeben. Bei der Ausgabe werden Abzüge der Bilder beispielsweise durch Belichten der Bilddaten auf Fotopapier erzeugt. Dieses lichtempfindliche Fotopapier muss anschließend in einem Papierentwicklungsgerät, welches ebenfalls Bestandteil des digitalen Minilabs ist, entwickelt werden. Das Minilab kann jedoch auch einen Tintenstrahldrucker als Ausgabestation aufweisen. In diesem Fall werden die Bilddaten mit Tinte auf Papier gedruckt. Eine Entwicklungsstation kann hier entfallen. Auch Thermosublimationsdrucker oder ähnliches, sind als Ausgabestationen in digitalen Minilabs vorstellbar. Zusätzlich zum Erzeugen von Papierabzügen kann vorgesehen sein, die bearbeiteten Bilddaten auf digitalen Speichermedien abzulegen oder sie ins Internet zu übertragen. So weisen digitale Minilabs als Ausgabeeinrichtungen oftmals auch CD-Brenner oder andere digitale Ausgabestationen auf und sind oftmals mit dem Internet verbunden.

Die am digitalen Minilab über unterschiedliche Eingabestationen eingegebenen Bilddaten werden also nach einer spezifischen Eingangsbearbeitung auf einem Eingangsspeicher auftragsweise zusammen mit Auftragsdaten abgelegt, anschließend nacheinander einer Bildbearbeitung unterzogen und in der Eingangsreihenfolge an den Ausgabestationen des digitalen Minilabs ausgegeben. Im Gegensatz zu den Hochleistungsprintern von Großlaboren haben diese Minilabs jedoch den Nachteil, dass ihr Durchsatz vergleichsweise gering ist, da sie oftmals zuviel Zeit für die Bearbeitung eines Auftrags benötigen.

Aufgabe der Erfindung war es deshalb, ein Verfahren zum automatischen Erzeugen von Abzügen fotografischer, digitaler Bilddaten zu entwickeln, bei dem die Aufträge schneller abgearbeitet werden.

Gelöst wird diese Aufgabe gemäß der Erfindung durch ein Verfahren mit den Merkmalen von Anspruch 1 und eine Vorrichtung mit den Merkmalen von Anspruch 13.

Erfindungsgemäß wird die Bildbearbeitung in einem digitalen Minilab so aufgebaut, dass ein nachfolgender Auftrag für den nächsten vorzunehmenden Bearbeitungsschritt vorgezogen werden kann, sobald ein Auftrag in einem zeitaufwändigen Bildbearbeitungsschritt bearbeitet wird, der für den nachfolgenden Auftrag nicht notwendig ist. In Minilabs sind Bearbeitungsschritte vorgesehen, die nicht für alle Aufträge durchzuführen sind. Für diese optionalen Schritte ist entweder in den Auftragsdaten vermerkt, ob sie auszuführen sind oder im Rahmen der Bildbearbeitung wird die Notwendigkeit festgestellt, diesen Auftrag einem solchen Schritt zu unterziehen. Während ein derartiger optionaler Bearbeitungsschritt an einem Auftrag durchgeführt wird, können nachfolgende noch zu bearbeitende Aufträge, bei denen dieser optionale Bearbeitungsschritt nicht vorzunehmen ist, also sozusagen im Rahmen der Bildbearbeitung überholen. Dadurch ändert sich ab dem nächsten Bearbeitungsschritt die Bearbeitungsreihenfolge der Aufträge. So wird auch die Ausgabereihenfolge eine andere sein, als die Reihenfolge, in der die Aufträge der Bildbearbeitung zugeführt werden. Während unter Umständen sehr zeitaufwändige optionale Bearbeitungsschritte an einem Auftrag durchgeführt werden, muss also nicht mehr, wie in herkömmlichen Geräten, der nächste Auftrag warten, bis der optionale Bearbeitungsschritt zu Ende geführt wurde, sondern der nächste Auftrag, der dieses Bearbeitungsschrittes nicht bedarf, wird vorgezogen und kann abgearbeitet werden, unabhängig davon, wie lange die Abarbeitung des optionalen Bearbeitungsschrittes dauert. Selbst wenn ein Auftrag also mehrere Stunden in einem optionalen Bearbeitungsschritt verharrt, da beispielsweise der Benutzer in diesem Schritt manuell eingreifen muss, wozu er aber gerade keine Zeit hat, können so Aufträge, die diesen Bearbeitungsschritt nicht benötigen, vollständig abgearbeitet und ausgegeben werden. Dadurch kann der Auftragsdurchsatz gegenüber herkömmlichen Geräten, bei denen strikt ein Auftrag nach dem anderen vollständig abgearbeitet wird, maßgeblich erhöht werden.

Vorteilhaft wirkt sich die Erfindung dann aus, wenn die Bildbearbeitungseinrichtung des digitalen Minilabs zusätzlich zur Kapazität für die Durchführung des optionalen Bearbeitungsschrittes noch genügend freie Rechenkapazität zur Verfügung hat, um weitere Bearbeitungsschritte an anderen Aufträgen gleichzeitig vorzunehmen. Je größer die freie Kapazität für nachfolgende Bearbeitungsschritte ist, umso mehr Aufträge können in der Zeit in der ein Auftrag im optionalen Bearbeitungsschritt verharrt durchgeführt werden.

Die Erfindung lässt sich besonders vorteilhaft dann einsetzen, wenn die optionalen Bearbeitungsschritte, an denen die Bearbeitungsreihenfolge der Aufträge geändert werden kann, als vollständig abgeschlossene Schritte realisiert sind. D. h. für die optionalen Bildbearbeitungsschritte muss genügend Rechenkapazität und Speicherplatz zur Verfügung stehen, um einen gesamten Auftrag innerhalb dieses einen Schrittes abzuarbeiten; ein Ineinandergreifen mit anderen Bearbeitungsschritten ist zu vermeiden. Ein solcher abgeschlossener Bearbeitungsschritt zeichnet sich also darin aus, dass ein Auftrag vollständig an den Bearbeitungsschritt übergeben werden kann, der gesamte Auftrag den Schritt durchläuft und anschließend zu einem Speicher oder dem nächsten Bearbeitungsschritt gesamt übergeben werden kann, ohne dass während Eingabe, Bearbeitung oder Übergabe des Auftrags an diesem Bearbeitungsschritt Speicher oder Rechenkapazität eines anderen Bearbeitungsschrittes benötigt wird.

Bevorzugt werden ganze Aufträge zwischen zwei Bearbeitungsschritten vollständig abgespeichert. Dadurch stehen nachfolgenden Bearbeitungsschritten gesamte abgespeicherte Aufträge zur Bearbeitung zur Verfügung. Werden mehrere Aufträge zwischen zwei Bearbeitungsschritten abgespeichert, so ist insbesondere ein wahlfreier Zugriff auf mehrere Aufträge möglich. Dadurch ist es gewährleistet, dass mehrere in einem derartigen Speicher abgelegten Aufträge durchsucht werden können, so dass ein Auftrag der einen oder mehrere nachfolgende Bearbeitungsschritte nicht durchlaufen muss, einem auf diese nicht vorgesehenen Bearbeitungsschritte folgenden Bearbeitungsschritt zugewiesen werden kann, falls zum Vornehmen des folgenden Bearbeitungsschrittes gerade freie Kapazität zur Verfügung steht. Die Pufferspeicher zwischen den Bearbeitungsschritten dürfen also nicht als sogenannte "FIFOs" (first in first out) ausgebildet sein, sondern müssen einen wahlfreien Zugriff auf alle in ihnen abgelegten Aufträge gewährleisten.

In einer besonders vorteilhaften Ausführungsform des erfindungsgemäßen Verfahrens werden optionale und zwingende Bearbeitungsschritte bei unterschiedlichen Aufträgen parallel durchgeführt. Dadurch ist es nicht nur möglich nachfolgende Bearbeitungsschritte an anderen Aufträgen vorzunehmen, während ein Auftrag in einem optionalen Bearbeitungsschritt wartet, sondern auch dann, wenn der optionale Bearbeitungsschritt durchgeführt wird. Hierdurch ist ein weiterer Zeitgewinn erreichbar. Diese Parallelbearbeitung kann dadurch realisiert werden, dass die Bildbearbeitungseinrichtung zwei Prozessoren oder multitasking-fähige Prozessoren aufweist, welche in der Lage sind, mehrere Bearbeitungsschritte parallel auszuführen.

Ein möglicher optionaler Bearbeitungsschritt, bei dem das erfindungsgemäße Verfahren besonders vorteilhaft einsetzbar ist, ist der sogenannte Preview. Im Preview werden alle oder einige Bilder eines Auftrags an der Benutzeroberfläche dargestellt, so dass der Benutzer die Qualität der auszugebender Bilder beurteilen kann. Im Preview-Modus kann der Benutzer dann manuell Korrekturen an den Bilder vornehmen, indem er Korrekturwerte beispielsweise zur Farbsättigung Farbbalance, Helligkeit, Gradation, Schärfe, etc. eingibt. Die so korrigierten Bilder werden erneut dargestellt, so dass der Benutzer direkt das Ergebnis seiner Eingriffe nachvollziehen kann. Weiter ist es im Preview-Modus üblich beispielsweise Grußkarten, Kalender oder sonstige Kombinationen von Bildern mit digitalen Files vorzunehmen. Sobald der Benutzer mit dem Ergebnis seiner manuellen Gestaltung oder Korrektur zufrieden ist, wird das in diesem manuellen Bearbeitungsschritt erzeugte Ergebnis eines Auftrags an den nächsten Bearbeitungsschritt übergeben. Oftmals sind diese manuellen Eingriffe aber sehr zeitaufwändig, da dem Benutzer hier sehr viel Gestaltungsmöglichkeiten zur Verfügung stehen. Im schlimmsten Fall kann es auch dazu kommen, dass der Benutzer gerade keine Zeit für diese manuellen Eingriffe an den Bilder zur Verfügung hat und der Auftrag deswegen im Preview-Modus verharrt, ohne dass irgendwelche Bildbearbeitungsschritte an ihm vorgenommen werden. So ist dieser manuelle Bildbearbeitungsschritt dadurch ausgezeichnet, dass er zwar wenig Rechenkapazität der Bildbearbeitungseinrichtung benötigt aber ein darin zu bearbeitender Auftrag relativ lange in diesem Bildbearbeitungsschritt verweilt. Dieser sehr zeitaufwändige aber wenig Rechenkapazität intensive Bildbearbeitungsschritt eignet sich also besonders vorteilhaft für das erfindungsgemäße Verfahren. Dadurch, dass andere Aufträge, die keines Previews bedürfen, vorgezogen werden und an ihnen andere Bildbearbeitungsschritte durchgeführt werden, während ein Auftrag im Preview verweilt, können diese vorgezogenen Aufträge ohne jegliches Kapazitätsproblem am Minilab weiter bearbeitet und ausgegeben werden, während der im Preview zu bearbeitende Auftrag in keinster Weise benachteiligt wird.

Ein weiterer besonders vorteilhaft erfindungsgemäß auszugestaltender optionaler Bearbeitungsschritt ist die sogenannte Rote-Augen-Korrektur. In diesem Schritt werden automatisch sogenannte rote Augen, also rote Pupillen, die in den Augen von mit Blitzlicht aufgenommenen Personen zu sehen sind, gesucht und korrigiert. Ein dafür zu verwendendes Verfahren ist beispielsweise in der US 6,278,491 beschrieben. Auch dieser Bearbeitungsschritt ist sehr zeitintensiv, da hier als erstes ein sehr aufwändiges Motiverkennungsverfahren durchzuführen ist. Insbesondere wenn man zur Durchführung dieses Verfahrens aber nicht den vollständigen Bilddatensatz, sondern einen Datensatz mit reduzierter Auflösung verwendet, ist zur Durchführung dieses Bearbeitungsschritts aber keine besonders große Rechenkapazität vonnöten. So kann es hier auch besonders vorteilhaft sein, wenn Aufträge, bei denen eine Rote-Augen-Erkennung nicht notwendig ist, da sie beispielsweise keine Personenaufnahmen enthalten, für den nächsten Bearbeitungsschritt vorgezogen werden, wobei dieses insbesondere schon parallel durchführbar ist, wodurch sich an diesem nachfolgenden Bearbeitungsschritt eine andere Reihenfolge der Aufträge ergibt.

In einer besonders vorteilhaften Ausführungsform des Verfahrens verbleibt der vollständige Bilddatensatz der Aufträge bis kurz vor die Ausgabe im Eingangsspeicher abgelegt. Für die Bildbearbeitung wird zu jedem dieser Bilddatensätze ein in der Auflösung reduzierter Hilfsdatensatz gebildet, der aufgrund seines deutlich geringeren Datenumfangs im Rahmen der Bildbearbeitung viel weniger Speicher- und Rechenkapazität benötigt. An diesem Hilfsdatensatz werden alle Bildbearbeitungsschritte durchgeführt und die zur Bearbeitung jedes spezifischen Hilfsdatensatzes benötigten Bildbearbeitungsparameter werden pro Hilfsdatensatz festgehalten. Sobald alle für die Bearbeitung notwendigen Bildbearbeitungsparameter bekannt sind, wird am Ende der Bildbearbeitung der vollständige Bilddatensatz aus dem Eingangsspeicher geholt und die zuvor am Hilfsdatensatz ermittelten Bildbearbeitungsparameter werden nunmehr auf diesen vollständigen Bilddatensatz angewandt, so dass sich aus diesen ein ausgabebereiter, korrigierter Datensatz ergibt. Dadurch, dass die eigentlichen Bildbearbeitungsschritte, also beispielsweise der Algorithmus, der ermittelt, welcher Verschärfungsparameter für dieses spezielle Bild am geeignetsten ist, an einem reduzierten Hilfsdatensatz vorgenommen wird, kann viel Bearbeitungszeit und Kapazität gespart werden. Es ist auch vorstellbar, dieses Vorgehen nur bei einem oder wenigen Bildbearbeitungsschritten anzuwenden. So kann es beispielsweise im Rahmen der Roten-Augen-Erkennung, welche sehr Rechenzeit intensiv ist, besonders vorteilhaft sein zur Gesichtserkennung oder zur gesamten Rote-Augen-Erkennung nur einen reduzierten Datensatz zu verwenden. Diese reduzierten Datensätze sind für das erfindungsgemäße Verfahren besonders vorteilhaft, da sie einfacher zwischen zwei Bearbeitungsschritten abzuspeichern sind, da hierfür keine so großen Speicherkapazitäten benötigt werden.

Es ist besonders vorteilhaft, wenn im Rahmen des erfindungsgemäßen Verfahrens eine Anzeige auf der Benutzeroberfläche vorgesehen ist, in welcher zumindest die aktuelle Bearbeitungsreihenfolge der Aufträge dargestellt wird, so dass der Benutzer diese mitverfolgen kann. Besonders vorteilhaft ist es, wenn zusätzlich die Eingangs-Bearbeitungsreihenfolge der Aufträge angezeigt wird, so dass der Benutzer eine Zuordnung von Auftragseingang und Ausgabe der Abzüge vornehmen kann. Auf diese Weise ist es für den Benutzer einfach, die eingescannten Filme, welche in der Eingangs-Bearbeitungsreihenfolge aus dem Gerät ausgegeben werden, den Stapeln von Abzügen zuzuordnen, welche in der Ausgabereihenfolge in den Sorter abgelegt werden.

In einer weiteren vorteilhaften Ausgestaltung des Verfahrens ist vorgesehen, die Bearbeitungsreihenfolge manuell vom Benutzer zu beeinflussen. Dadurch wird beispielsweise gewährleistet, dass das Minilab einen sogenannten Expressprint, also einen Auftrag der sofort erledigt werden muss, bei allen Bearbeitungsschritten mit höchster Priorität behandelt, so dass Bilder dieses Auftrags ausgegeben werden können, obwohl sich bereits andere Aufträge in der Bearbeitung im digitalen Minilab befanden, ohne dass zuerst all diese abgearbeitet werden müssen.

In einer weiteren vorteilhaften Ausführung des Verfahrens ist vorgesehen, die Bearbeitungsreihenfolge für einzelne Bearbeitungsschritte vom Benutzer manuell wählbar zu gestalten. So kann der Benutzer beispielsweise am Gerät einstellen, dass die Bearbeitungsreihenfolge der Aufträge immer so gewählt wird, dass Aufträge, welche eines Previews bedürfen, nachrangig behandelt werden, da er von vorneherein weiß, dass ihm für den Preview gerade keine Zeit zur Verfügung steht. Eine weitere Möglichkeit ist hier beispielsweise Bilder, bei denen eine Gesichtserkennung und Korrektur, wie beispielsweise eine Farbkorrektur der Gesichter vorgenommen werden muss, alle nacheinander abzuarbeiten, so dass sie der Benutzer, falls gewünscht, alle nacheinander am Preview kontrollieren kann.

Es kann jedoch auch besonders vorteilhaft sein, die Bearbeitungsreihenfolge von einer Steuereinrichtung optimieren zu lassen. Die Steuereinrichtung überwacht hierfür die aktuelle Kapazität der Bearbeitungsstationen, an denen die Bearbeitungsschritte durchgeführt werden, die Verfügbarkeit von zu bearbeitenden Aufträgen sowie die Auslastung der Ausgabeeinrichtungen. Anhand dieser Daten ist die Steuereinrichtung in der Lage, die Bearbeitungsreihenfolge der eingegangenen Aufträge für die jeweiligen Bearbeitungsschritte so zu wählen, dass alle Aufträge beispielsweise in möglichst kurzer Gesamtzeit abgearbeitet werden. Je nach Benutzervorgabe kann die Steuereinrichtung aber auch so konfiguriert sein, dass eine optimale Bearbeitungsreihenfolge dann erzielt ist, wenn die Ausgabeeinrichtung immer ausgelastet ist oder wenn eine bestimmte Auftragssorte bevorzugt behandelt wird. Hier sind weitere Konstellationen vorstellbar, die der Steuereinrichtung zur Optimierung der Bearbeitungsreihenfolge vorgegeben werden.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

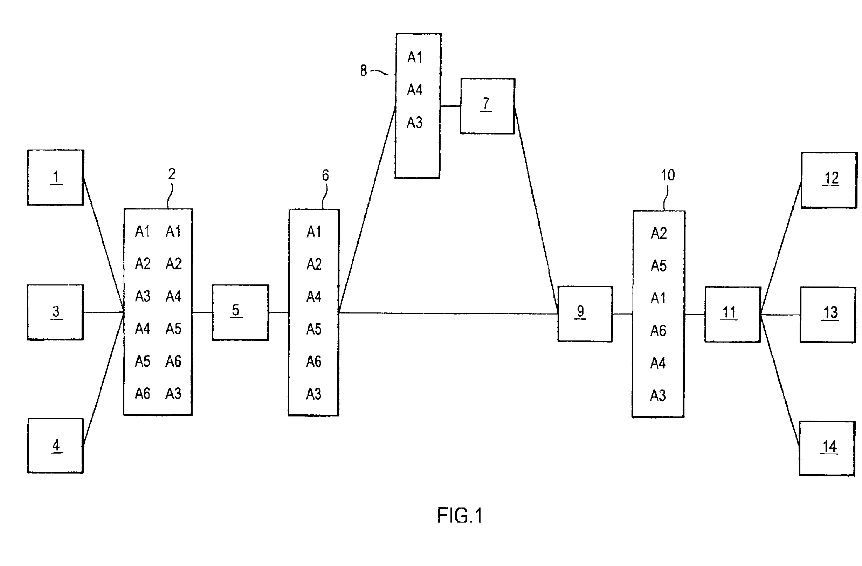

Figur 1 zeigt schematisch den Ablauf eines erfindungsgemäßen Verfahrens. An einer Eingabestation 1 werden digitale Bilddatenfiles einer digitalen Kamera von der Speicherkarte der Kamera eingelesen, mit Auftragsdaten versehen, welche die vorzunehmenden Bildverarbeitungsschritte sowie die Eigenschaften der zu erstellenden Abzüge charakterisieren und mit den Bilddaten zu einem Auftrag zusammengefasst. Dieser Auftrag wird dann über ein mit der Eingabestation in Verbindung stehendes digitales Minilab übertragen und im Eingangsspeicher 2 des digitalen Minilabs als Auftrag A1 abgespeichert. Am digitalen Minilab befindet sich auch ein Scanner 3 bei dem konventionelle Filme abgetastet und digitale Bilddatenfiles erstellt werden. Diese Bilddatensätze A2 und A3 werden nach dem Abtasten am Scanner 3 einer Scannerkorrektur unterzogen. In dieser Korrektur werden systematische Fehler des Abtastgerätes 3, wie beispielsweise unterschiedliche Empfindlichkeiten einzelner Sensorelemente korrigiert, sowie eine Kratzerkorrektur durchgeführt, bei der in bekannter Weise die Bilddaten mit einem parallel aufgenommenen Infrarotscan korreliert werden. Diese eingangs korrigierten Bilddaten werden ebenfalls zusammen mit zugehörigen Auftragsdaten im Eingangsspeicher 2 als Aufträge A2 und A3 abgelegt. Die Auftragsdaten zu diesen Bilddaten können an der Benutzeroberfläche vom Benutzer noch vor dem Abtasten der Filme gewählt werden. Des Weiteren ist das digitale Minilab mit dem Internet verbunden, über das von Endkunden direkt über ein Netzwerk 4 Aufträge A5 und A6 an den Eingangsspeicher des digitalen Minilabs übertragen werden. Diese Aufträge werden entweder im Netz oder beim Eingang in das Minilab eingangs bearbeitet. Die Eingangsbearbeitung digitaler Daten besteht insbesondere in einer Dekompression. Am Eingangsspeicher 2 befinden sich nun mehrere Aufträge A1 bis A6 in einer Eingangsreihenfolge. Die eingegangenen Aufträge können nun am Eingangsspeicher 2 des digitalen Minilabs in eine Bearbeitungsreihenfolge z. B. A1, A2, A4, A5, A6, A3 umgeordnet werden. Bei der Erstellung der Bearbeitungsreihenfolge können beispielsweise Ausgabeeigenschaften der Aufträge berücksichtigt werden. So ist es beispielsweise sinnvoll einen Auftrag A3 in der Bearbeitungsreihenfolge hinten anzustellen, der zum Erstellen der Abzüge ein Papierformat benötigt, welches mit dem derzeit am Minilab eingelegten Papier nicht realisierbar ist. Sobald die Bearbeitungsreihenfolge feststeht, werden die Aufträge an einen ersten Bearbeitungsschritt 5, der für alle Aufträge zwingend vorgeschrieben ist, wie beispielsweise einem Grauabgleich oder einer Verschärfung bearbeitet. Hier können auch mehrere Bearbeitungsschritte nacheinander erfolgen. Nach dem durchgeführten Bearbeitungsschritt 5 werden die Aufträge in einem Pufferspeicher 6 erneut abgespeichert. Nach diesem gemeinsamen Bearbeitungsschritt 5, der für alle Aufträge zwingend vorgesehen ist, ist in 7 ein optionaler Bearbeitungsschritt vorgesehen, welcher beispielsweise in der Roten-Augen-Korrektur besteht. Nur die Auftragsdaten der Aufträge A1, A4 und A3 sehen vor, dass bei diesen Aufträgen eine Rote-Augen-Korrektur durchgeführt werden soll. So werden diese Aufträge in einem weiteren Pufferspeicher 8 übertragen, um an ihnen das Rote-Augen-Er-kennungsverfahren 7 vorzunehmen. Es ist auch möglich, dass die Aufträge im Pufferspeicher 6 verbleiben und von dort dem Bearbeitungsschritt 7 jeweils nur die Aufträge zugeführt werden, für die eine Rote-Augen-Korrektur vorgesehen ist. Dadurch kann ein weiterer Pufferspeicher 6 eingespart werden. Während diese Aufträge A1, A4 und A3 der Reihe nach einem Rote-Augen-Erkennungsverfahren unterzogen werden, wird erfindungsgemäß an den anderen Aufträgen, für die dieser Bearbeitungsschritt nicht notwendig ist (Aufträge A2, A5 und A6) der nächste Bearbeitungsschritt 9 vorgenommen. Beim Bearbeitungsschritt 9, welcher beispielsweise in einer Farbkorrektur bestehen kann, wird also zuerst der Auftrag A2 bearbeitet, da A1 währenddessen in 7 auf rote Augen hin untersucht wird. Im Pufferspeicher 10, in dem die in 9 bearbeiteten Aufträge abgespeichert werden, wird also als erster Auftrag A2 abgelegt. Die Bearbeitungsreihenfolge hat sich also zwischen den Speichern 6 und 10 verändert. Falls die Rote-Augen-Korrektur sehr aufwändig ist, kann in der Zeit, in der A1 korrigiert wird, noch ein weiterer Auftrag A5 in Bearbeitungsschritt 9 Farbkorrigiert werden. Während die Farbkorrektur an A5 vorgenommen wurde, ist nun der Auftrag A1 in 7 korrigiert und kann als nächster in 9 einer Farbkorrektur unterzogen werden. So wird für die weitere Bearbeitung als nächstes der Auftrag A1 in 10 abgelegt. Entsprechend werden auch die weiteren Aufträge abgearbeitet, so dass sich am Pufferspeicher 10 die Bearbeitungsreihenfolge A2, A5, A1, A4 und A3 ergibt, welche für die Bearbeitung am Schritt 9, also der Farbkorrektur, maßgeblich war. An der nicht dargestellten Benutzeroberfläche wird dem Benutzer die Eingabereihenfolge A1 bis A6, die ursprüngliche Bearbeitungsreihenfolge sowie die geänderte Bearbeitungsreihenfolge, welche aktuell in Speicher 10 herrscht, angezeigt. Greift der Benutzer nicht ein, so werden die Aufträge in der geänderten Bearbeitungsreihenfolge, wie sie im Speicher 10 herrscht, in einem Bearbeitungsschritt 11 in den Farbraum des gewünschten Ausgabegerätes transferiert. Die Ausgabe kann an einem CD-Brenner 12 erfolgen, bei dem alle oder nur ausgewählte Aufträge auf CD-Roms gebrannt werden. Im Normalfall werden aber alle Aufträge an einen Printer 13 ausgegeben, an dem Abzüge der Bilder erzeugt werden. Bei diesem Printer kann es sich beispielsweise um einen Belichter, wie einen Laserbelichter, einen LCD-, DMD- oder sonstigen Lichtmodulatorbelichter oder einem LED-Belichter oder ähnliche dem Fachmann bekannten Belichtermodule handeln. Besteht der Printer 13 aus einem Belichter von lichtempfindlichem Bildmaterial, so schließt sich im digitalen Minilab an diesem Belichter eine Entwicklungseinheit an, in der das lichtempfindliche Material entwickelt wird. Die Abzüge werden nach dem Belichten entwickelt und nach der Entwicklung auftragsweise in Stapeln an einen Sorter übergeben. Eine weitere Möglichkeit für die Ausgabe von Aufträgen besteht darin, das Minilab mit dem Internet 14 zu verbinden. Über das Internet können die bearbeiteten Bilddaten direkt an den Endkunden übertragen werden.

Die Bildbearbeitungsschritte im Ausführungsbeispiel der Figur 1 wurden nur beispielhaft gewählt. Anstelle der Rote-Augen-Korrektur kann als optionaler Bearbeitungsschritt beispielsweise auch ein Preview mit manueller Bildbearbeitung oder nur ein Preview der Bilder vorgesehen sein. Anstelle dieses Bearbeitungsschritts oder zusätzlich dazu kann ein optionaler Bearbeitungsschritt auch in allen anderen bekannten Bildbearbeitungsverfahren bestehen, wenn diese nicht auf alle Aufträge anzuwenden sind, sondern nur dann erfolgen, wenn dies in den Auftragsdaten vorgesehen ist oder im Rahmen der Bildbearbeitung festgestellt wird, dass dieser Bildbearbeitungsschritt für das Bildergebnis vorteilhaft wäre. So kann ein optionaler Bearbeitungsschritt beispielsweise auch in der Bildverschärfung bestehen, falls vorher die Körnigkeit der Bilder überprüft wird, um festzustellen, ob an einem Bild Verschärfung vorzunehmen ist oder nicht. So kann es beispielsweise bei sehr körnigen Bildern nachteilig sein sie zu verschärfen. Optionale und zwingende Bildbearbeitungsschritte können ohne Einfluss auf das erfindungsgemäße Verfahren in beliebiger Reihenfolge angeordnet sein. Die Aufträge müssen auch nicht zwangsweise einen Bearbeitungsschritt nach dem anderen bis zur Ausgabe durchlaufen. Es kann ebensogut vorgesehen sein, dass beispielsweise nach einer vollständigen Abarbeitung eines Bildes am Preview festgestellt wird, dass eine Rote-Augen-Korrektur bei diesem Auftrag notwendig gewesen wäre, obwohl dies in den Auftragsdaten nicht vorgesehen ist. In diesem Fall würde der Auftrag nach einmaligem Durchlaufen der Bildbearbeitung wieder am Anfang der Bildbearbeitung oder vor der Rote-Augen-Korrektur in die noch zu bearbeitenden Aufträge eingereicht und durchliefe die Bildbearbeitung ein zweites Mal. Auch in diesem Fall könnten währenddessen andere Aufträge vorgezogen werden.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

## Patentansprüche

1. Verfahren zum automatischen Erzeugen von Abzügen fotografischer, digitaler Bilddaten, bei dem
- die eingehenden Bilddaten zusammen mit Auftragsdaten auftragsweise abgespeichert und in einer Bearbeitungsreihenfolge zur Bearbeitung bereitgestellt,
- die Bilddaten auftragsweise gemäß der Bearbeitungsreihenfolge bearbeitet werden, wobei die Bearbeitung
- zwingende Bearbeitungsschritte, die die Bilddaten aller Aufträge durchlaufen und
- optionale Bearbeitungsschritte, die die Bilddaten bestimmter Aufträge durchlaufen,
umfasst und
- Erzeugen von Abzügen der bearbeiteten Bilddaten,
**dadurch gekennzeichnet, dass** die Bearbeitungsreihenfolge der Aufträge für nachfolgende Bearbeitungsschritte geändert wird, wenn die Bilddaten eines Auftrages einen optionalen Bearbeitungsschritt durchlaufen.

2. Verfahren nach Anspruch 1, **dadurch gekennzeichnet, dass** die Bearbeitungsreihenfolge in Abhängigkeit von der Kapazität nachfolgender Bearbeitungsschritte geändert wird.

3. Verfahren nach Anspruch 1 oder 2, **dadurch gekennzeichnet, dass** optionale Bearbeitungsschritte als abgeschlossene Schritte unabhängig vom Ablauf anderer Bearbeitungsschritte durchgeführt werden.

4. Verfahren nach Anspruch 1 oder 2, **dadurch gekennzeichnet, dass** Aufträge zwischen Bearbeitungsschritten vollständig abgespeichert werden.

5. Verfahren nach Anspruch 1 oder 2, **dadurch gekennzeichnet, dass** optionale und zwingende Bearbeitungsschritte parallel bearbeitet werden.

6. Verfahren nach Anspruch 1, **dadurch gekennzeichnet, dass** ein optionaler Bearbeitungsschritt im manuellen Bearbeiten von an einer Benutzeroberfläche dargestellten Bilddaten besteht.

7. Verfahren nach Anspruch 1, **dadurch gekennzeichnet, dass** ein optionaler Bearbeitungsschritt im automatischen Erkennen von roten Augen besteht.

8. Verfahren nach Anspruch 1, **dadurch gekennzeichnet, dass** zur Bearbeitung der Bilddaten reduzierte Hilfsdatensätze gebildet werden, an Hand derer Bildbearbeitungsparameter ermittelt werden.

9. Verfahren nach Anspruch 8, **dadurch gekennzeichnet, dass** als zwingender Bearbeitungsschritt ein Endbearbeitungsschritt vorgesehen ist, in dem die Bildbearbeitungsparameter auf den vollständigen Bilddatensatz angewandt werden, um die Bilddaten für die Abzüge zu erzeugen.

10. Verfahren nach Anspruch 1, **dadurch gekennzeichnet, dass** die geänderte Bearbeitungsreihenfolge an der Benutzeroberfläche angezeigt wird.

11. Verfahren nach Anspruch 10, **dadurch gekennzeichnet, dass** die Bearbeitungsreihenfolge für alle Bearbeitungsschritte manuell gewählt werden kann.

12. Verfahren nach Anspruch 10, **dadurch gekennzeichnet, dass** die Bearbeitungsreihenfolge für einzelne Bearbeitungsschritte manuell gewählt werden kann.

13. Vorrichtung zum automatischen Erzeugen von Abzügen fotografischer, digitaler Bilddaten mit
- einer Eingabeeinrichtung (1, 3, 4) zum Eingeben der Bilddaten und zugehöriger Auftragsdaten,
- einem Eingangsspeicher (2) zum Speichern mehrerer Aufträge,
- einer Bildbearbeitungseinrichtung zum auftragsweisen Bearbeiten der Bilddaten,
- einer Ausgabeeinrichtung (12, 13, 14) zum Erzeugen von Abzügen der bearbeiteten Bilddaten
**dadurch gekennzeichnet, dass** die Bildbearbeitungseinrichtung mehrere Bildbearbeitungsstationen (5, 7, 9, 11) zum Bearbeiten wenigstens eines Auftrags aufweist sowie Pufferspeicher (6, 8, 10) zwischen Bildbearbeitungsstationen (5, 7, 9, 11) in denen wenigstens zwei Aufträge vollständig abspeicherbar sind, und eine Steuereinrichtung zum Ändern der Bearbeitungsreihenfolge der Aufträge, die mit Bildbearbeitungsstationen (5, 7, 9, 11) und/oder Pufferspeichern (6, 8, 10) verbu nden ist.

14. Vorrichtung nach Anspruch 13, **dadurch gekennzeichnet, dass** die Steuereinrichtung mit dem Eingangsspeicher (2) verbunden ist, so dass die Bearbeitungsreihenfolge manuell wählbar ist.

15. Vorrichtung nach Anspruch 13, **dadurch gekennzeichnet, dass** die Bildbearbeitungseinrichtung wenigstens zwei Prozessoren (7, 9) aufweist.
